Europäisches Patentamt

European Patent Office

Office européen des brevets

(11) Veröffentlichungsnummer: **0 208 104**
**A2**

(12) **EUROPÄISCHE PATENTANMELDUNG**

(21) Anmeldenummer: **86107101.7**

(22) Anmeldetag: **26.05.86**

(51) Int. Cl.⁴: **H 02 M 3/155**

(30) Priorität: **08.06.85 DE 3520587**

(43) Veröffentlichungstag der Anmeldung:
**14.01.87 Patentblatt 87/3**

(84) Benannte Vertragsstaaten:
**AT DE FR IT**

(71) Anmelder: **Blaupunkt-Werke GmbH**
**Robert-Bosch-Strasse 200**
**D-3200 Hildesheim(DE)**

(72) Erfinder: **Stüdemann, Bernd, Ing.-Grad.**
**Küchenthalstr. 29**
**D-3200 Hildesheim(DE)**

(74) Vertreter: **Ellers, Norbert, Dipl.-Phys.**
**Blaupunkt-Werke GmbH Robert-Bosch-Strasse 200**
**D-3200 Hildesheim(DE)**

(54) **Spannungswandler.**

(57) Zur Spannungsversorgung von nachrichtentechnischen Geräten, wie beipielsweise Datensichtgeräten und Computern, wird vorgeschlagen, ein Schaltnetzteil mit mehreren Ausgängen vorzusehen und an mindestens einen der Ausgänge einen Spannungswandler anzuschließen. Der Spannungswandler kann vom Schaltnetzteil oder von einem in dem nachrichtentechnischen Gerät erzeugten Takt getaktet werden. Die Erfindung umfaßt ferner einen Spannungswandler, der sich in einem weiten Frequenzbereich takten läßt.

EP 0 208 104 A2

Croydon Printing Company Ltd

0208104

BLAUPUNKT-WERKE GMBH, 3200 Hildesheim

Spannungswandler

Die Erfindung geht aus von einem Spannungswandler nach der Gattung des Hauptanspruchs.

Zur Versorgung von nachrichtentechnischen Geräten, wie beispielsweise Fernsehgeräten und Datensichtgeräten, sind primärgetaktete Schaltnetzteile bekannt, bei welchen ein meist freischwingender Sperrwandler aus der gleichgerichteten Netzspannung die Primärwicklung eines Transformators mit Rechteckimpulsen speist. Von mehreren Sekundärwicklungen sind über Gleichrichter die verschiedenen für das jeweilige Gerät benötigten Versorgungsspannungen abnehmbar. Die Höhe dieser Spannungen liegt zwischen 5 V und 250 V. Derartige primärgetaktete Schaltnetzteile haben sich wegen ihrer Wirtschaftlichkeit und Kompaktheit allgemein durchgesetzt.

...

Werden jedoch an derartige Schaltnetzteile Geräte oder Geräteteile angeschlossen, welche an die Qualität der Versorgungsspannung - beispielsweise bezüglich der Spannungskonstanz, des Lastsprungverhaltens, der Kurzschlußfestigkeit und der Kreuzregelung - hohe Anforderungen stellen, sind höherwertige Spannungsquellen erforderlich. Dieses Erfordernis tritt insbesondere auf, wenn aus einem Netzteil ein Datensichtgerät und ein Rechner gespeist werden sollen. Hierbei tritt zusätzlich der Nachteil der primärgetakteten Schaltnetzteile auf, daß wegen der vom Rechner benötigten hohen Ströme bei niedrigen Spannungen (beispielsweise 16 A bei 5 V) die automatische Fertigung des Wandlertransformators Schwierigkeiten bereitet. Schließlich sind Störungen durch die Schaltimpulse der Schaltnetzteile zu vermeiden.

Aufgabe der vorliegenden Erfindung ist es, Spannungswandler anzugeben, welche die obengenannten Nachteile nicht aufweisen.

Die erfindungsgemäßen Spannungswandler mit den kennzeichnenden Merkmalen des Hauptanspruchs haben den Vorteil, daß eine wirtschaftliche Spannungsversorgung von nachrichtentechnischen Geräten, insbesondere Datensichtgeräten und Rechnern gewährleistet ist. Durch die in den weiteren Ansprüchen aufgeführten Maßnahmen sind vorteilhafte Weiterbildungen und Verbesserungen der Erfindung möglich.

Ausführungsbeispiele der Erfindung sind in der Zeichnung an Hand mehrerer Figuren dargestellt und in der nachfolgenden Beschreibung näher erläutert. Es zeigt:

Fig. 1 ein Blockschaltbild eines ersten Spannungs-

...

wandlersystems,

Fig. 2 ein Blockschaltbild eines zweiten Spannungswandlersystems,

Fig. 3 ein Blockschaltbild eines dritten Spannungswandlersystems,

Fig. 4 ein Blockschaltbild eines vierten Spannungswandlersystems,

Fig. 5 die zur Erläuterung der Erfindung erforderlichen Teile einer Steuerschaltung für einen
Spannungswandler,

Fig. 6 ein Schaltbild eines ersten Spannungswandlers
gemäß der Erfindung.

Fig. 7 ein Schaltbild eines zweiten Spannungswandlers gemäß der Erfindung und

Fig. 8 ein Schaltbild eines dritten Spannungswandlers gemäß der Erfindung.

Gleiche Teile sind in den Figuren mit gleichen
Bezugszeichen versehen.

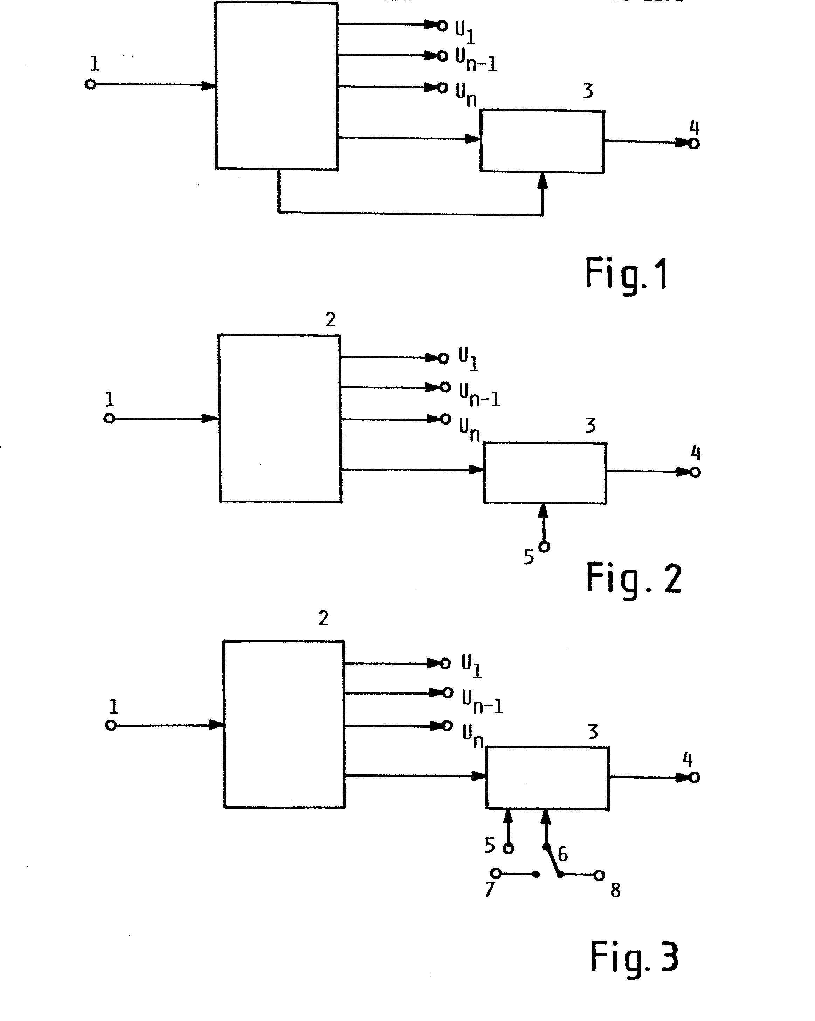

Der Anordnung nach Fig. 1 wird bei 1 die Netzspannung zugeführt. In einem an sich bekannten primärgetakteten Schaltnetzteil 2 werden verschiedene Spannungen $U_1$ bis $U_{n-1}$ und $U_n$ erzeugt. Für besondere
Zwecke, beispielsweise zur Versorgung eines Rechners, wird aus einer weiteren Ausgangsspannung des
primärgetakteten Schaltnetzteils 2 in einem nachgeschalteten Spannungswandler 3 eine Spannung $U_A$
erzeugt, die am Ausgang 4 entnommen werden kann.

Das primärgetaktete Schaltnetzteil ist freischwingend, beispielsweise mit einer Taktfrequenz von
50 kHz. Zur Taktung des Spannungswandlers 3 werden
diesem aus dem Schaltnetzteil 2 Impulse zugeführt.
Dieses hat den Vorteil, daß den Betriebsspannungen
überlagerte Störimpulse, welche sich nicht vollstän-

...

dig vermeiden lassen, die gleiche Frequenz aufweisen, und somit nicht noch zusätzliche Störungen durch Interferenzen möglich sind. Bei verschiedenen Anwendungsfällen des erfindungsgemäßen Spannungswandlers kann es jedoch vorteilhaft sein, den Spannungswandler 3 wie in Fig. 2 gezeigt mit einem bei 5 zugeführten Takt zu synchronisieren, welcher in dem mit Spannung zu versorgenden Gerät vorhanden ist. Hierzu eignet sich zum Beispiel bei Fernsehgeräten und Datensichtgeräten die Zeilenfrequenz.

Bei verschiedenen Geräten ist es wünschenswert, eine der Versorgungsspannungen in der Höhe umzuschalten, ohne hierbei die weiteren Ausgangsspannungen des primärgetakteten Schaltnetzteils zu beeinflussen. Dieses ist beispielsweise erforderlich, wenn die Versorgungsspannung der Zeilenendstufe von beispielsweise 145 V auf 175 V bei der Umschaltung eines Sichtgerätes auf Bildschirmtext mit 60 Hz Vertikalfrequenz erhöht wird. Hierzu kann beispielsweise der Spannungswandler 3 mit einer umschaltbaren Referenzspannung versehen sein. Dazu ist in Fig. 3 ein Schalter 5 vorgesehen, mit dem wahlweise eine der an den Eingängen 7 und 8 anliegenden Referenzspannungen zugeführt werden kann.

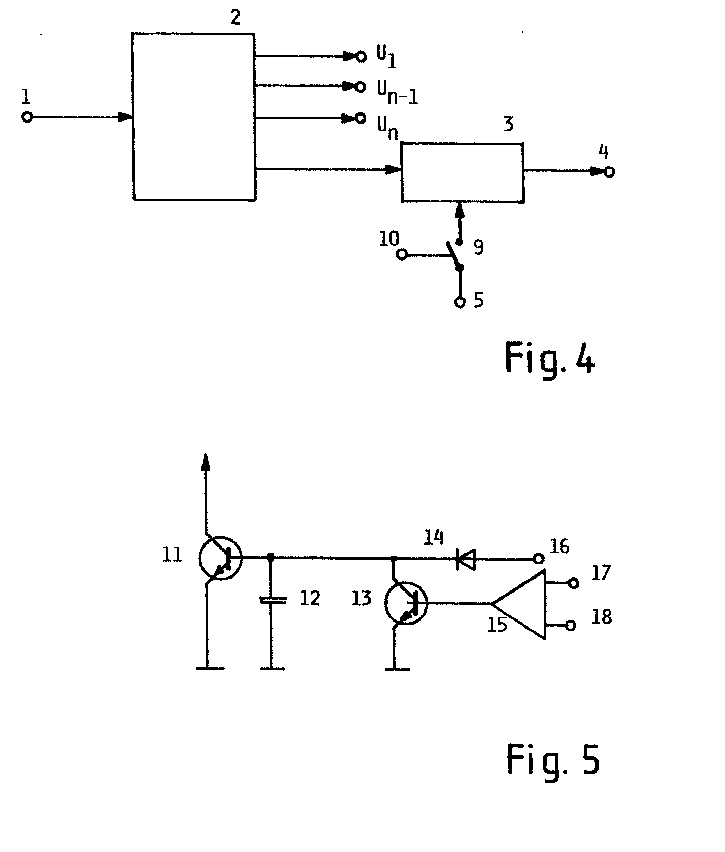

Der Wandler 3 kann dazu jedoch auch als Aufwärtswandler ausgebildet sein, wobei die Spannungsumschaltung in einfacher Weise durch Zuschalten der Taktimpulse verwirklicht wird, wie es in Fig. 4 dargestellt ist. Ist der Schalter 9 offen, so wird die Eingangsspannung unverändert dem Ausgang 18 zugeleitet. Der Schalter 9 kann mit Hilfe einer bei 10 zugeführten Steuerspannung gesteuert werden. Bei geschlossenem Schalter 7 gelangen die bei 5 zugeführten Taktim-

...

pulse zum Wandler 3.

Sollen mehrere der vom Schaltnetzteil 2 abgegebenen Spannungen besonders stabilisiert werden oder umschaltbar sein, so ist es durchaus möglich, dem Schaltnetzteil 2 mehrere Spannungswandler nachzuschalten.

Bei vielen Anwendungen der in den Fig. 1 bis 4 gezeigten Schaltungen ist die Taktung des Spannungswandlers 3 in einem weiten Frequenzbereich erforderlich. Eine Schaltung, welche hierzu besonders geeignet ist, ohne auf die Anwendung in einem weiten Taktfrequenzbereich eingeschränkt zu sein, wird im folgenden an Hand von Fig. 5 näher erläutert, die lediglich einige zur Erläuterungen der Erfindung besonders wichtige Teile darstellt.

Ein erster Transistor 11 dient zur Ansteuerung des in Fig. 5 nicht dargestellten Halbleiterschalters des Wandlers 3 (Fig. 1). Der Basis-Emitter-Strecke des ersten Transistors 11 ist ein Kondensator 12 und ein zweiter Transistor 13 parallelgeschaltet. Über eine Diode 14 werden positive Taktimpulse zugeführt, welche den Kondensator 12 derart aufladen, daß durch den Transistor 11 Strom fließt, welcher den Halbleiterschalter in den leitenden Zustand steuert. Der Kondensator 12 ist nun derart dimensioniert, daß seine Ladung nach dem Taktimpuls ausreicht, um dem ersten Transistor 11 bis zum folgenden Taktimpuls Basisstrom zuzuführen, so daß dieser bis zum nächsten Taktimpuls im leitenden Zustand bleibt. Der Basis des Transistors 13 wird die Ausgangsspannung eines Komparators 15 zugeführt, dessen Eingänge 17, 18 mit einer Referenzspannung und der Ausgangsspan-

...

nung des Spannungswandlers 3 (Fig. 1) beaufschlagt sind. Überschreitet nun die aufgrund des Stromflusses durch den Halbleiterschalter ansteigende Ausgangsspannung die Referenzspannung, so wird der Transistor 13 in den leitenden Zustand geschaltet und entlädt den Kondensator 12. Der erste Transistor 11 wird damit nichtleitend und sperrt den Halbleiterschalter.

Beim folgenden über die Diode 14 zugeführten Taktimpuls wird der erste Transistor 11 und damit der Halbleiterschalter dann wieder leitend.

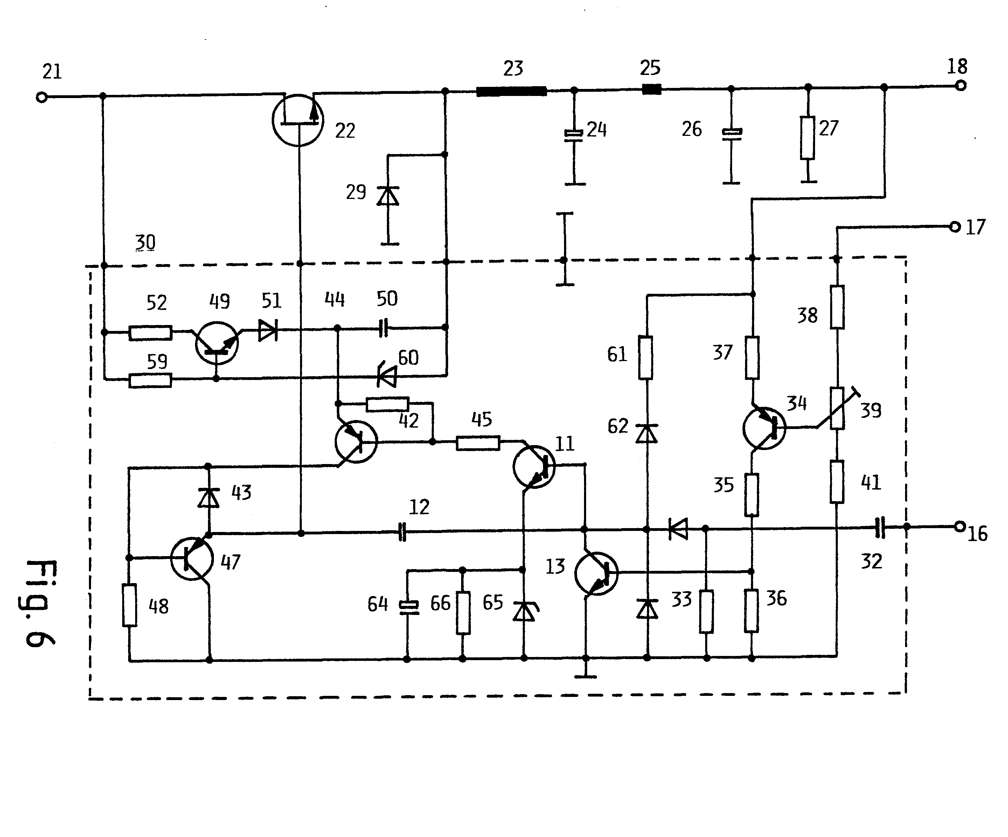

Fig. 6 stellt ein ausführlicheres Schaltbild eines erfindungsgemäßen Spannungswandlers dar. Der Eingang 21 wird periodisch über einen Halbleiterschalter 22 mit einer Drosselspule 23 verbunden. Während der leitenden Phase des Halbleiterschalters 22 wird über die Drosselspule 23 der Kondensator 24 geladen. Zur Verringerung von Schaltstörungen auf der Ausgangsspannung ist eine Induktivität 25 und ein weiterer Kondensator 26 vorgesehen. Schließlich dient ein Widerstand 27 als Belastung, so daß im Falle eines Leerlaufs des Spannungswandlers nach Fig. 5 eine geringfügige Entladung der Kondensatoren 24 und 26 erhalten bleibt, was Voraussetzung für einen geregelten Betrieb des Spannungswandlers ist.

Der Schaltungspunkt 28 bildet den Ausgang des Spannungswandlers. Wird der Halbleiterschalter 22, welcher sowohl ein Leistungsfeldeffekttransistor als auch ein bipolarer Transistor sein kann, in den nichtleitenden Zustand geschaltet, so beginnt ein zeitlich abnehmender Strom durch die Induktivität 23 und die Freilaufdiode 29 zu fließen, bis der Halb-

...

leiterschalter 22 wieder in den leitenden Zustand geschaltet wird.

Derartige Spannungswandler sind an sich bekannt, eine eingehendere Erläuterung erübrigt sich daher. Es wird lediglich noch darauf hingewiesen, daß der in Fig. 6 dargestellte Spannungswandler ein sogenannter Abwärtswandler ist, bei welchem die Ausgangsspannung niedriger als die Eingangsspannung ist.

In der gestrichelt eingerahmten Steuerschaltung 30 ist nun unter anderem die bereits im Zusammenhang mit Fig. 4 beschriebene Schaltung vorgesehen. Diese besteht aus dem ersten Transistor 11, dem Kondensa-tor 12, dem zweiten Transistor 13 und der Diode 14. Die Taktimpulse werden über den Eingang 16 und den Kondensator 32 der Diode 14 zugeführt. Der Kondensator 32 bildet zusammen mit dem Widerstand 33 ein Differenzierglied, um möglichst kurze Impulse zur Aufladung des Kondensators 12 zu erhalten. Der in Fig. 4 dargestellte Komparator 15 wird von dem Transistor 34 gebildet, dessen Kollektor über einen Spannungsteiler 35, 36 mit der Basis des zweiten Transistors 13 verbunden ist. Die Ausgangsspannung des Spannungswandlers wird dem Emitter des Transistors 34 über einen Widerstand 37 zugeführt. Die Referenzspannung wird über einen Eingang 17 einem aus dem Widerstand 38, der Diode 39, dem Potentiometer 40 und dem Widerstand 41 bestehenden Spannungsteiler zugeleitet. Der Schleifer des Potentiometers 40 ist mit der Basis des Transistors 34 verbunden, wodurch ein Feinabgleich der dem Transistor zugeführten Referenzspannung möglich wird.

...

Die Diode 39 dient zur Kompensation des Temperaturgangs der Basis-Emitter-Strecke des Transistors 34
und steht daher mit dem Transistor 34 vorzugsweise
in leitender Verbindung.

Solange die Ausgangsspannung geringer als die Referenzspannung ist, ist der Transistor 34 gesperrt.
Die Basis des Transistors 13 erhält über den Widerstand 36 Massepotential, womit dieser ebenfalls
gesperrt ist. Die Ladung, welche der Kondensator 12
durch einen vorausgegangenen Taktimpuls erhalten
hat, bleibt erhalten. Somit befindet sich der erste
Transistor 11 im leitenden Zustand und steuert einen
zu einer Gegentaktstufe gehörenden Transistor 42
ebenfalls in den leitenden Zustand. Dieser verbindet
über die Diode 43 die Steuerelektrode des Halbleiterschalters 22 mit einem Schaltungspunkt 44, welcher
ein gegenüber der Quellelektrode des Halbleiterschalters 22 positives Potential aufweist. Dieser wird
damit ebenfalls leitend, wodurch die Spannung an den
Kondensatoren 24 und 26 ansteigt.

Übersteigt diese die Referenzspannung, wird der
Transistor 34 leitend und steuert den Transistor 13
ebenfalls in den leitenden Zustand. Damit wird der
Kondensator 12 entladen und der erste Transistor 11
gesperrt. Der Transistor 42 erhält dann über den
Widerstand 45 keinen Basisstrom mehr, wobei der Widerstand 46 für ein sicheres Sperren des Transistors
42 sorgt.

Dadurch, daß die Basis des Transistors 47, welcher
zusammen mit dem Transistor 42 eine Gegentaktstufe
bildet, nicht mehr an den Punkt 44 mit positiver
Spannung angeschlossen ist, erhält der Transistor 47

...

über den Widerstand 48 Basisstrom und wird damit leitend. Die Steuerelektrode des Halbleiterschalters 22 wird damit an Massepotential gelegt, was eine Sperrung des Halbleiterschalters 22 zur Folge hat. Wie bereits aus der vorangegangenen Beschreibung hervorgeht, ist jeweils nur einer der Transistoren 42 und 47 leitend, so daß trotz Gegentaktansteuerung des Halbleiterschalters 22 kein zusätzlicher Strom durch die Transistoren 42 und 47 fließt.

Die zur Ansteuerung des Halbleiterschalters 22 erforderliche, gegenüber der Quellelektrode positive Spannung wird durch eine Spannungsaufstockungsschaltung erzeugt, welche aus dem Transistor 49, dem Kondensator 50, der Diode 51, den Widerständen 52 und 53 sowie aus der Z-Diode 60 besteht. Während der nichtleitenden Phase des Halbleiterschalters 22 liegt die Quellelektrode etwa auf Massepotential. Der Kondensator 50 (Booster-Kondensator) wird über den Widerstand 52, den Transistor 49 und die Diode 51 auf eine Spannung aufgeladen, welche etwa der Durchbruchspannung der Z-Diode 60 entspricht. Bei einer praktisch ausgeführten Schaltung hat sich hierfür ein Wert von etwa 12 V als günstig erwiesen. Diese Spannung reicht aus, um den Halbleiterschalter 22 in den leitenden Zustand zu steuern. Mit zunehmender Spannung an der Quellelektrode des Halbleiterschalters 22 nimmt dann auch die für die Ansteuerung benötigte Spannung am Schaltungspunkt 44 zu, da sich der Kondensator 50 bei geeigneter Dimensionierung während der leitenden Phase des Halbleiterschalters 22 nur unwesentlich entlädt.

...

Gegenüber der Schaltung nach Fig. 5 ist der Kondensator 12 mit seinem vom Transistor 11 abgewandten Belag nicht mit Masse sondern mit der Steuerelektrode des Halbleiterschalters 22 verbunden. Damit wird die Umladung und damit der Schaltvorgang erheblich beschleunigt.

Der Spannungswandler gemäß Fig. 6 weist eine Kurzschlußsicherung auf, die im folgendem beschrieben wird: Der Ausgang 18 des Spannungswandlers ist über einen Widerstand 61 und eine Diode 62 mit dem Kondensator 12 und der Basis des Transistors 11 verbunden. Im Falle eines Kurzschlusses wird somit der Schaltungspunkt 63 mit Masse verbunden. Allerdings reicht diese Verbindung ohne weiteres nicht aus, um die Taktimpulse vollständig kurz zu schließen, und somit eine Aufladung des Kondensators 12 zu verhindern. Dieses ist beispielsweise für einen Anlauf nach dem Einschalten des Spannungswandlers wichtig. Während des Betriebs ist jedoch der mit dem Emitter des ersten Transistors 11 verbundene Kondensator 64 auf eine durch die Z-Diode 65 vorgegebene Spannung von beispielsweise 3,9 V aufgeladen. Stellt sich dann ein Kurzschluß ein, so bleibt das Basispotential des ersten Transistors 11 unter dem Emitter-Potential, so daß die Taktimpulse den Halbleiterschalter 22 nicht in den leitenden Zustand schalten können. Durch die Sperrung des ersten Transistors 11 wird jedoch der Kondensator 64 über den Widerstand 66 entladen, so daß nach einer durch die Zeitkonstante des Kondensators 64 und des Widerstandes 66 bedingten Zeit der erste Transistor 11 trotz des Kurzschlusses am Ausgang 18 in den leitenden Zustand gesteuert wird. Besteht dann der Kurzschluß weiter, so wird der Kondensator 64 über den ersten Tran-

...

sistor 11 wieder aufgeladen und somit der Spannungswandler wieder für eine vorgegebene Zeit gesperrt.

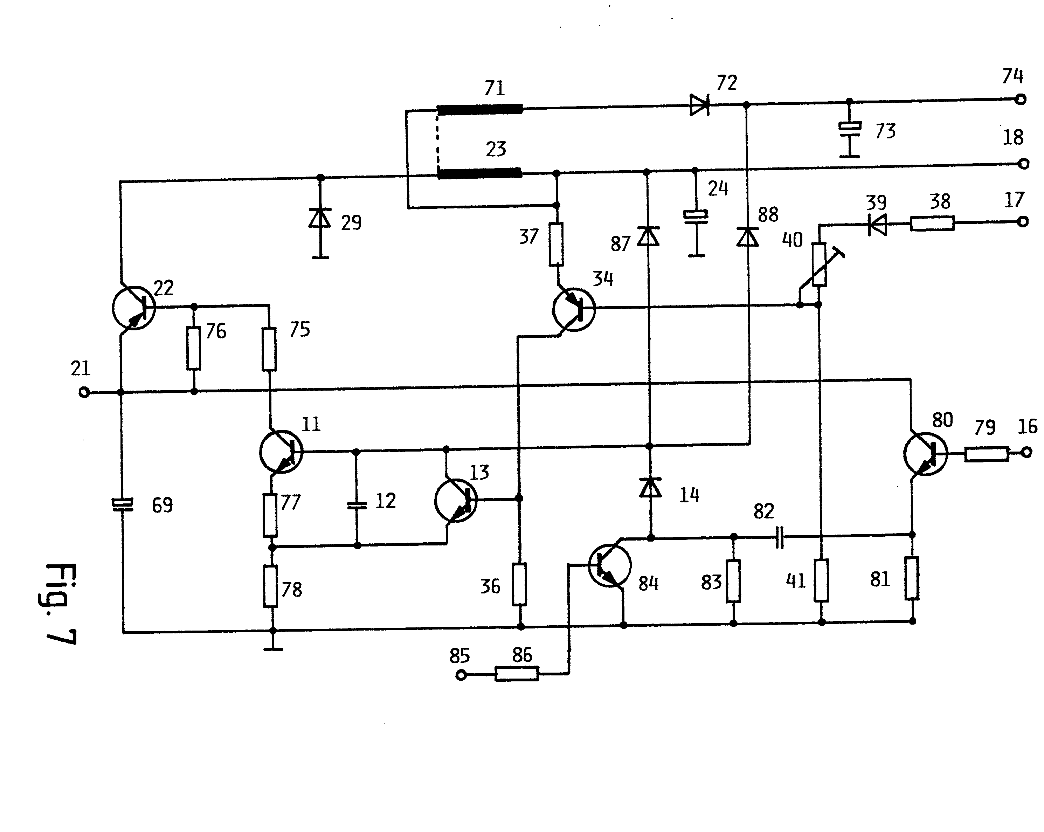

Fig. 7 zeigt ein weiteres Ausführungsbeispiel eines
erfindungsgemäßen Spannungswandlers, der als Abwärtswandler geschaltet ist und bei welchem die Drosselspule 23 über eine zusätzliche Wicklung 71 verfügt.
An die zweite Wicklung 71 ist über eine Gleichrichterdiode 72 ein Ladekondensator 73 und ein zweiter
Ausgang 74 angeschlossen, so daß der Spannungswandler nach Fig. 7 zwei Ausgangsspannungen aufweist.
Zwischen dem Eingang 21 und dem Massepotential ist
ein Kondensator 69 angeordnet. Als Halbleiterschalter 22 wird ein bipolarer Transistor verwendet,
welcher über einen Spannungsteiler 75, 76 direkt vom
ersten Transistor 11 angesteuert wird. Der von der
Basis des Transistors 11 abgewandte Belag des Kondensators 12 ist über einen Spannungsteiler 77, 78 mit
dem Emitter des Transistors 11 verbunden.

Zur Entladung des Kondensators 12 dient wie bei dem
im Zusammenhang mit den Figuren 5 und 6 beschriebenen Spannungswandler der Transistor 13. Die am Ausgang 18 anliegende Ausgangsspannung wird mit Hilfe
des Transistors 34 mit der bei 17 zugeführten Referenzspannung verglichen. Der Transistor 34 weist
einen Emitter-Widerstand 37 und einen Arbeitswiderstand 36 auf. Die Referenzspannung wird ebenfalls
wie bei der Schaltungsanordnung nach Fig. 6 über
einen aus den Widerständen 38 und 41, sowie der
Diode 39 und dem Potentiometer 40 bestehenden Spannungsteiler der Basis des Transistors 34 zugeführt.

...

Die Taktimpulse gelangen über den Eingang 16 und den Widerstand 79 zu einem als Impedanzwandler geschalteten Transistor 80, dessen Arbeitswiderstand 81 mit Massepotential verbunden ist. Vom Emitter des Transistors 80 werden die Taktimpulse über das Differenzierglied 82, 83 und die Diode 14 zur Basis des Transistors 11 geleitet. Die Dioden 87 und 88 dienen zur Abschaltung im Kurzschlußfall in ähnlicher Weise, wie es im Zusammenhang mit Fig. 6 erläutert wurde.

Mit Hilfe eines weiteren Transistors 85, dessen Kollektor-Emitter-Strecke parallel zum Widerstand 83 geschaltet ist, können die Taktimpulse kurzgeschlossen werden, was zur Abschaltung der Spannung an den Ausgängen 18 und 74 führt. Eine entsprechende Schaltspannung wird über den Eingang 85 und den Widerstand 86 dem Transistor 84 zugeführt.

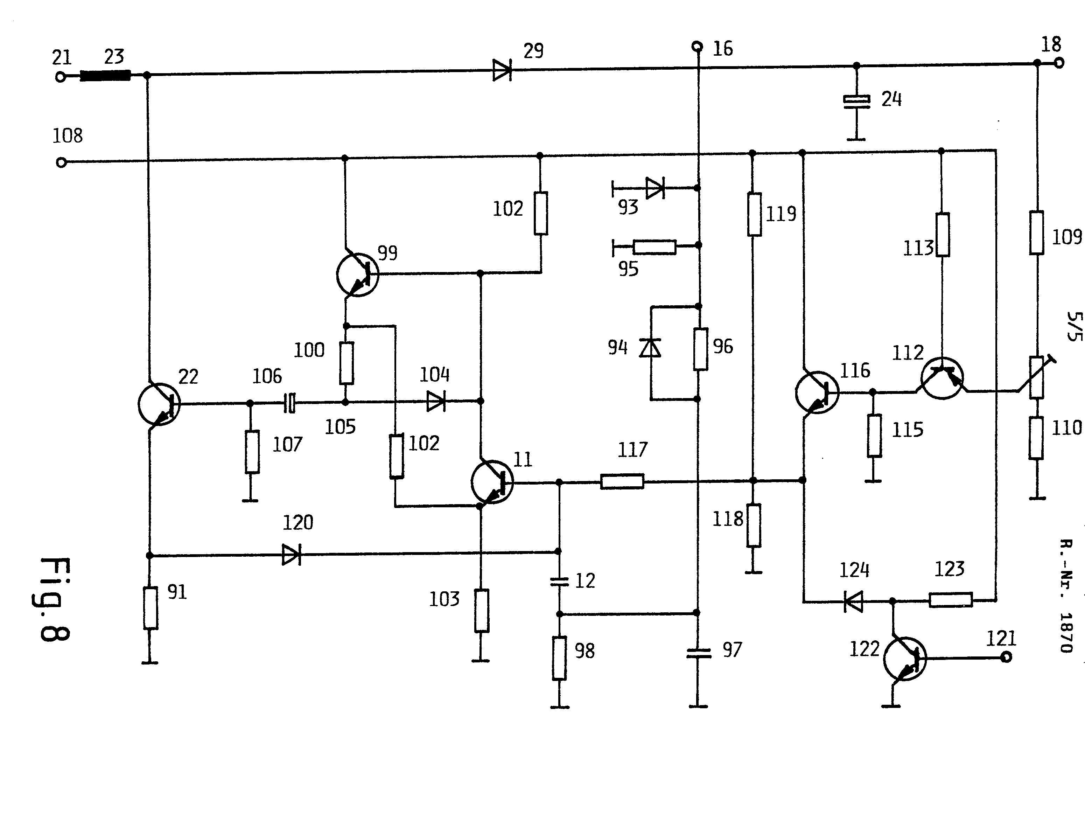

Fig. 8 zeigt einen Aufwärtswandler, bei welchem durch Abschaltung der Taktimpulse die am Ausgang 18 anstehende Spannung auf die dem Eingang 21 zugeführte Spannung zurückgeschaltet werden kann. Werden jedoch die Taktimpulse zugeführt, so steht am Ausgang 18 eine Spannung an, welche höher ist als die Eingangsspannung. Ein derartiger Spannungswandler wird vorteilhafterweise bei einem Fernsehgerät verwendet, welches für den Bildschirmtextbetrieb auf eine höhere Zeilen- und Bildfrequenz umschaltbar ist. Über die Drosselspule 23 gelangt die Eingangsspannung an den Kollektor des Halbleiterschalters 22, dessen Emitter über einen Widerstand 91 mit Massepotential verbunden ist. Der Kollektor des Halbleiterschalters 22 ist mit der Anode einer Diode 29 verbunden, deren Kathode an einen Ladekondensator 24 und an den Ausgang 18 angeschlossen ist.

...

Mit Hilfe der im folgenden beschriebenen Steuerschaltung wird nun der Halbleiterschalter 22 in den leitenden Zustand geschaltet, wenn die Ausgangsspannung kleiner als ein vorgegebener Wert ist, während die Sperrung des Halbleiterschalters 22 durch die bei 16 zugeführten Taktimpulse erfolgt. Diese Umkehrung ergibt sich daraus, daß bei dem Aufwärtswandler der Halbleiterschalter 22 in einem Querzweig liegt, also gegen Masse geschaltet wird, während der Halbleiterschalter 22 bei einem Abwärtswandler im Längszweig liegt.

Die bei 16 zugeführten horizontalfrequenten Taktimpulse gelangen über einen Kondensator 92 und ein aus Dioden 93, 94 und Widerständen 95, 96 bestehendes Netzwerk, welches zur Impulsformung dient, an den Kondensator 97. Von hier aus werden sie an den mit einem Widerstand 98 verbundenen Belag des Kondensators 12 geleitet. Durch jeden der Taktimpulse wird der Kondensator 12 derart geladen, daß der Transistor 11 in den leitenden Zustand gesteuert wird. Der Transistor 11 bildet zusammen mit dem Transistor 99, den Widerständen 100, 101, 102 und 103 einen querstromlosen Gegentakttreiber, wie er auch bei der Schaltung nach Fig. 6 verwendet wird. Am Ausgang 105 des Gegentakttreibers stehen Rechteckimpulse an, welche negatives Potential nach einer durch den Taktimpuls gesteuerten Flanke aufweisen. Wenn die Ausgangsspannung die Referenzspannung unterschreitet, nehmen die bei 105 anstehenden Rechteckimpulse Massepotential an. Diese Impulse werden über einen Koppelkondensator 106 der Basis des Halbleiterschalters 22 zugeführt. Die Basis ist ferner über einen Widerstand 107 mit Massepotential verbunden.

...

Die Steuerschaltung wird mit einer bei 108 zugeführten Betriebsspannung von + 12 V, welche gleichzeitig auch als Referenzspannung dient, versorgt. Ein mit Hilfe eines aus den Widerständen 109, 110 und dem Potentiometer 111 aufgebauten Spannungsteilers wird ein einstellbarer Teil der bei 18 anstehenden Ausgangsspannung dem Emitter eines Transistors 112 zugeführt. Der Transistor erhält über das R/C-Glied 113, 114 Basisspannung. Der Kollektor des Transistors 112 ist einerseits über einen Widerstand 115 mit Massepotential und andererseits mit der Basis eines weiteren Transistors 116 verbunden, dessen Kollektor an die Betriebsspannung angeschlossen ist und dessen Emitter über einen Widerstand 117 mit der Basis des Transistors 11 verbunden ist. Dem Transistor 116 dient ein Widerstand 118 als Arbeitswiderstand. Ein weiterer Widerstand 119 ist mit der positiven Betriebsspannung verbunden.

Sinkt nun die am Ausgang 18 anstehende Ausgangsspannung unter die bei 108 zugeführte Referenzspannung, so wird der Transistor 112 nichtleitend, womit auch die Transistoren 116 und 11 gesperrt werden. Der Ausgang 105 des Gegentakttreibers 11, 99 wird dann positiv, wodurch der Halbleiterschalter 22 in den leitenden Zustand gesteuert wird.

Da beim Einschalten des Spannungswandlers die Ausgangsspannung erst allmählich aufgebaut wird, fließt kurz nach dem Einschalten durch den Halbleiterschalter 22 ein sich ständig steigernder Strom. Um diesen beim Einschalten und ebenfalls im Falle eines Kurzschlusses zu begrenzen, wird eine dem Strom proportionale Spannung vom Widerstand 91 abgegriffen und

...

über eine Diode 120 der Basis des Transistors 11 zugeführt. Wird der Strom zu groß, so wird der Transistor 11 in den leitenden Zustand geschaltet, worauf die Spannung am Ausgang 105 des Gegentakttreibers Massepotential einnimmt und den Halbleiterschalter 22 abschaltet. Dann sinkt der Strom auf null, worauf der Transistor 11 wieder gesperrt wird. Dieses kann sich mehrmals wiederholen, bis eine durch den stationären Zustand gegebene Taktung erreicht ist.

Bei dem Spannungswandler nach Fig. 7 kann durch eine bei 121 zugeführte Steuerspannung die Taktung abgeschaltet werden, so daß sich am Ausgang 18 der Eingangsspannung bei 21 entsprechende Spannung einstellt. Hierzu wird der Transistor 122 gesperrt, so daß an seinem Kollektor eine über den Arbeitswiderstand 123 zugeführte positive Spannung ansteht. Diese gelangt über die Diode 124 und den Widerstand 117 zur Basis des Transistors 11, steuert diesen in den leitenden und damit den Halbleiterschalter 22 in den nichtleitenden Zustand. Ist der Transistor 122 leitend, so liegt sein Kollektor auf Massepotential und die Diode 124 ist gesperrt, so daß die obenbeschriebene Taktung und Regelung des Spannungswandlers erfolgen kann.

Patentansprüche

1. Spannungswandler mit einem von Impulsen angesteuerten Halbleiterschalter, wobei mit dem Tastverhältnis der Impulse die Höhe der Ausgangsspannung steuerbar ist,
dadurch gekennzeichnet,
daß der Halbleiterschalter (22) mit Hilfe von zugeführten Taktimpulsen in einen ersten Zustand steuerbar ist und daß der Halbleiterschalter (22) in einen zweiten Zustand steuerbar ist, wenn die Ausgangsspannung einen vorgegebenen Wert über- bzw. unterschreitet.

2. Spannungswandler nach Anspruch 1,
dadurch gekennzeichnet,
daß der Halbleiterschalter (22) mit Hilfe der zugeführten Taktimpulse in den leitenden Zustand steuerbar ist und daß der Halbleiterschalter (22) in den nichtleitenden Zustand steuerbar ist, wenn die Ausgangsspannung den vorgegebenen Wert überschreitet.

3. Spannungswandler nach Anspruch 2,
dadurch gekennzeichnet,
daß dem Halbleiterschalter (22) eine bistabile Schaltung (11, 12, 13, 14) zugeordnet ist, welche durch die Taktimpulse in einen ersten stabilen Zustand und durch die Ausgangsspannung eines Komparators (15) in den zweiten stabilen Zustand schaltbar ist, und daß einem ersten Eingang (18) des Komparators die Ausgangsspannung des Spannungswandlers und einem zweiten Eingang (17) des Komparators eine Referenzspannung zugeführt ist.

...

4.  Spannungswandler nach Anspruch 3,

dadurch gekennzeichnet,

daß die bistabile Schaltung einen Kondensator (12) umfaßt,
dessen einer Belag mit der Basis eines ersten Transistors (11)
verbunden ist, der kollektorseitig – gegebenenfalls über eine
weitere Transistorstufe (42, 47) – mit der Steuerelektrode des
Halbleiterschalters (22) in Verbindung steht, daß ein zweiter
Transistor (13), dessen Basis an den Ausgang des Komparators
(15) angeschlossen ist, mit seiner Kollektor-Emitter-Strecke
zwischen der Basis des ersten Transistors (11) und festem
Potential angeordnet ist und daß die Taktimpulse über eine
Diode (14) der Basis des ersten Transistors (11) zuführbar
sind.

5.  Spannungswandler nach Anspruch 4,

dadurch gekennzeichnet,

daß die weitere Transistorstufe (42, 47) die Impulse am Kollektor des ersten Transistors (11) invertiert und mit ihrem
Ausgang an die Steuerelektrode des Halbleiterschalters (22)
und den anderen Belag des Kondensators (12) angeschlossen ist.

6.  Spannungswandler nach Anspruch 4,

dadurch gekennzeichnet,

daß zur Abschaltung bei Kurzschluß eine weitere Diode (62)
zwischen den Ausgang (18) des Spannungswandlers und die Basis
des ersten Transistors (11) geschaltet ist und daß der Emitter
des ersten Transistors (11) über eine Parallelschaltung aus
einem Widerstand (66), einem Kondensator (64) und einer
Z-Diode (65) mit festem Potential verbunden ist.

...

7.  Spannungswandlersystem,

dadurch gekennzeichnet,

daß ein Schaltnetzteil (2) mehrere Ausgänge aufweist und daß an mindestens einem der Ausgänge ein Spannungswandler (3) angeschlossen ist.

8.  Spannungswandlersystem nach Anspruch 10,

dadurch gekennzeichnet,

daß der Schaltnetzteil (2) ein primär getaktetes Netzteil und der Spannungswandler (3) ein sekundär getakteter Schaltregler ist, welchem vom primär getakteten Netzteil Taktimpulse zugeführt sind.

9.  Spannungswandlersystem nach Anspruch 7,

dadurch gekennzeichnet,

daß das Schaltnetzteil (2) ein primär getaktetes Netzteil und der Spannungswandler (3) ein sekundär getakteter Schaltregler ist, welchem von einem an das Spannungswandlersystem angeschlossenen Gerät Taktimpulse zugeführt sind.

10.  Spannungswandlersystem nach Anspruch 7,

dadurch gekennzeichnet,

daß die Ausgangsspannungen des Schaltnetzteils (2) zur Versorgung eines Datensichtgerätes und die Ausgangsspannung des Spannungswandlers (3) zur Versorgung eines Computers dient.

0208104
R.-Nr. 1870

Fig.1

Fig.2

Fig.3

0208104

R.-Nr. 1870

$U_1$

$U_{n-1}$

$U_n$

**Fig. 4**

**Fig. 5**

0208104

R.-Nr. 1870

Fig. 6

Fig. 7

5/5

0208104
R.-Nr. 1870

Fig.8